# FASCICULE DE BREVET EUROPEEN

(11) **EP 1 137 142 B1**
(45) Date de publication et mention de la délivrance du brevet: **23.12.2009**
(21) Numéro de dépôt: 01400706.6
(22) Date de dépôt: 16.03.2001
(51) Int. Cl.: H02G 3/10

(54) **Boîtier pour appareillage à disposer le long d'une goulotte, notamment pour appareillage électrique**
Einbaudose für elektrisches Gerät zur Montage entlang einem Kabelkanal
Electrical apparatus box to be placed alongside a cableduct

(30) Priorité: 24.03.2000 FR 0003785
(43) Date de publication de la demande: 26.09.2001
(73) Titulaire: Legrand France, 87000 Limoges (FR); Legrand SNC, 87000 Limoges (FR)
(72) Inventeur: Buard, Yvon, 53600 Voutre (FR)
(74) Mandataire: Santarelli

(56) Documents cités:
- EP-A- 0 911 932
- DE-U- 9 417 256

## Description

La présente invention concerne d'une manière générale l'implantation d'un appareillage, et plus particulièrement d'un appareillage électrique, le long d'une goulotte intervenant en saillie sur une paroi et assurant le logement et la protection des câbles ou conducteurs électriques assurant la desserte d'un tel appareillage.

Par goulotte, on entend ici, de manière usuelle, un conduit comportant, globalement, d'une part, un socle, par lequel il est adapté à être appliqué à la paroi concernée, et dont la section transversale est ouverte, et, d'autre part, un couvercle qui, pour la fermeture de ce socle, est dûment rapporté sur celui-ci, par exemple par encliquetage.

La goulotte dont il est question ici est généralement de petites dimensions, appelée encore moulure.

La présente invention vise plus particulièrement le cas où l'implantation d'un appareillage le long d'une goulotte se fait à la faveur d'un boîtier comportant une platine adaptée à être rapportée sur cette paroi et un cadre coiffant ladite platine pour former un logement pour l'appareillage concerné.

La mise en oeuvre d'un tel boîtier d'appareillage électrique le long d'une goulotte, peut présenter certaines difficultés.

En effet, les conducteurs électriques circulant dans la goulotte et devant être raccordés à l'appareillage électrique situé dans le boîtier présentent généralement une certaine rigidité et adoptent de ce fait difficilement les rayons de courbure que l'on souhaite leur faire prendre pour être raccordés électriquement audit appareillage.

En conséquence, la mise en place par encliquetage du cadre du boîtier sur la platine équipée de l'appareil relié électriquement aux conducteurs n'est pas toujours facile, et peut même nécessiter plusieurs tentatives du fait que les conducteurs électriques sont coincés ou débordent de l'ensemble. Ceci occasionne une perte de temps et une insatisfaction pour l'installateur.

Le document DE 9 417 256 décrit un boîtier pour appareillage électrique à disposer le long d'une goulotte qui comporte une platine comprenant à proximité d'un bord par lequel elle côtoie la goulotte, des moyens de passage pour des câbles destinés à être raccordés à l'appareillage électrique.

Afin de pallier aux inconvénients précités, la présente invention propose un boîtier pour appareillage électrique tel que défini en introduction, dans lequel ladite platine comprend au moins à proximité d'un de ses bords par lequel elle doit côtoyer la goulotte, des moyens de retenue et de guidage de câbles ou conducteurs électriques circulant dans ladite goulotte et destinés à être raccordés à l'appareillage concerné, lesdits moyens de retenue et de guidage comprenant au moins une patte qui s'élève verticalement à partir de la platine et comprend un retour sensiblement horizontal surplombant ladite platine.

Ainsi, l'installateur peut aisément fixer la platine du boîtier conforme à l'invention sur la paroi, le long de la goulotte, puis positionner les câbles ou conducteurs électriques circulant dans la goulotte et destinés à être raccordés à l'appareillage situé dans le boîtier, dans les moyens de retenue et de guidage portés par ladite platine, de façon à en être libéré pour encliqueter le cadre du boîtier sur la platine équipée de l'appareil relié électriquement audit conducteur.

L'installateur n'est pas gêné par lesdits câbles ou conducteurs électriques car ceux-ci sont bloqués par les moyens de retenue et de guidage et ne peuvent déborder de la platine.

Au surplus, grâce aux moyens de retenue et de guidage du boîtier selon l'invention, l'installateur est libéré des câbles ou conducteurs électriques maintenus par ces moyens, lorsqu'il met en place les couvercles de fermeture sur la goulotte, ou encore lorsqu'il met en place l'auvent sur la goulotte, dans le cas où celui-ci n'est pas solidaire du cadre du boîtier.

D'autres caractéristiques non limitatives et avantageuses du boîtier conforme à l'invention sont les suivantes :
- le retour se présente sous la forme d'une languette présentant une certaine flexibilité ;
- les moyens de retenue et de guidage comprennent deux pattes situées à distance l'une de l'autre et qui s'élèvent verticalement à partir de ladite platine, ces pattes comportant chacune un retour horizontal surplombant ladite platine, les deux retours étant dirigés l'un vers l'autre ;
- les retours desdites pattes sont sensiblement jointifs ;
- les retours desdites pattes sont disposés l'un par rapport à l'autre de sorte qu'il subsiste entre leurs bords libres en regard un certain jeu pour le passage des câbles ou conducteurs électriques ;
- les retours desdites pattes se chevauchent ;
- chaque patte est située sur le bord de la platine par lequel elle doit côtoyer la goulotte ;
- lesdites pattes portent en dessous de leurs retours une plaque de soutien et de guidage des câbles ou conducteurs électriques, qui surplombe le socle de la goulotte de sorte que son bord externe se place au-dessus du volume de câblage de ladite goulotte ;
- les moyens de retenue et de guidage viennent de formation avec ladite platine.

La description qui va suivre en regard des dessins annexés, donnés à titre d'exemples non limitatifs, fera bien comprendre en quoi consiste l'invention, et comment elle peut être réalisée.

Sur les dessins annexés :
- la figure 1 est une vue en perspective de dessus du boîtier selon l'invention mis en place sur une goulotte ;
- la figure 2 est une vue de dessous en perspective du cadre et de l'auvent du boîtier représenté sur la figure 1, la partie mobile de l'auvent étant sortie au maximum par rapport à sa partie fixe ;
- la figure 3 est une vue en perspective de dessus de la platine du boîtier représenté sur la figure 1, et
- la figure 4 est une vue de dessous de la platine représentée sur la figure 3.

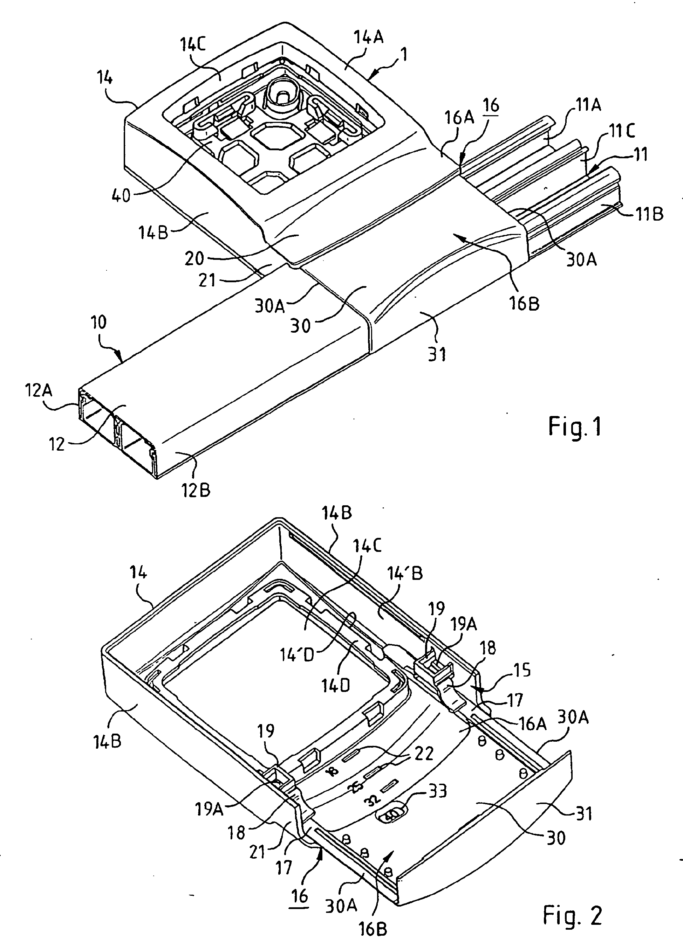

Tel qu'illustré sur la figure 1, et de manière connue en soi, il s'agit, globalement, de disposer, le long d'une goulotte 10 intervenant en saillie sur une paroi non représentée, un appareillage électrique, également non représenté, en mettant en oeuvre, pour ce faire, un boîtier 1.

Dans la forme de réalisation représentée, et de manière connue en soi, la goulotte 10, comporte, globalement, un socle 11, par lequel elle est adaptée à être rapportée sur la paroi à équiper, et dont la section transversale est ouverte, et un couvercle 12, qui, pour la fermeture de ce socle 11, est rapporté sur celui-ci, par exemple par encliquetage.

Le socle 11 de la goulotte est délimité latéralement par deux ailes longitudinales 11A, 11B, et son espace intérieur est longitudinalement séparé en deux compartiments égaux de câblage par une paroi centrale 11C dont le bord supérieur arrive sensiblement au niveau du retour des ailes longitudinales 11A, 11B.

Le couvercle 12 est ici du type recouvrant, c'est à dire qu'il comporte des bords tombants 12A, 12B venant recouvrir les faces externes des ailes longitudinales 11A, 11B du socle 11 de la goulotte 10.

Le boîtier 1 intervient généralement entre deux tronçons de couvercle, un seul tronçon étant représenté sur la figure 1.

Comme cela est représenté sur la figure 2, le boîtier 1 comporte, d'une part, un cadre 14 qui, adapté à être rapporté sur la paroi à équiper (non représentée), le long de la goulotte 10, est apte à former un logement pour l'appareillage concerné, et, plus particulièrement, pour le mécanisme de cet appareillage, et qui, le long de celui de ses côtés par lequel il doit côtoyer la goulotte 10, présente une ouverture 15, et, d'autre part, un auvent 16 qui, s'étendant à compter du cadre 14, et plus particulièrement à partir de la partie supérieure de son ouverture 15, est destiné à couvrir localement la goulotte 10, transversalement par rapport à celle-ci, en s'étendant en pratique sur le socle 11 de cette goulotte 10, entre les deux tronçons de son couvercle 12 (voir la figure 1).

Le cadre 14 comprend une paroi de façade 14A pourvue d'une ouverture frontale 14C pour le passage d'une portion de l'appareillage accessible à l'usager, ainsi que deux parois latérales parallèles 14B et une paroi arrière non référencée.

L'auvent 16 du boîtier 1 comprend une partie fixe 16A solidaire du cadre 14, et une partie mobile 16B, pourvue de deux bras parallèles 17 qui sont montés coulissants à l'intérieur du cadre de sorte que le positionnement de la partie mobile 16B de l'auvent 16 par rapport au cadre 14, et plus particulièrement par rapport à la partie fixe 16A de l'auvent, est avantageusement réalisé de manière télescopique selon une série de positions stables prédéfinies correspondant à différentes largeurs de goulottes.

Selon le mode de réalisation représenté sur les figures 1 et 2, la partie fixe 16A de l'auvent 16 vient de formation avec le cadre 14 du boîtier, elle comprend d'une part, une paroi avant 20 qui, à partir de l'ouverture 15 du cadre 14, et plus précisément à partir de la partie supérieure de cette ouverture 15, prolonge sur une certaine hauteur la paroi de façade 14A dudit cadre 14 du boîtier 1, et, d'autre part, deux parois latérales 21 prolongeant chacune une des parois latérales parallèles 14B du cadre 14 du boîtier.

La partie mobile 16B de l'auvent 16 comprend une paroi avant 30 dont deux bords latéraux parallèles 30A sont prolongés par les bras 17 et une paroi d'embout 31 s'étendant perpendiculairement à la paroi avant 30 à partir de son bord avant opposé aux bras, la paroi avant 30 de la partie mobile 16B de l'auvent étant apte à coulisser sous la paroi avant 20 de la partie fixe 16A de celui-ci.

Comme le montre plus particulièrement la figure 1, les parois avant 20 et 30 des parties fixe 16A et mobile 16B de l'auvent 16, ainsi que la paroi d'embout 31 de la partie mobile 16B, sont aptes à assurer une continuité de paroi entre les tronçons de couvercle 12, la paroi d'embout 31 de la partie mobile 16B de l'auvent 16 venant recouvrir les bords tombants des tronçons de couvercle 12 adjacents.

En outre, avantageusement, la face interne de la paroi avant 20 de la partie fixe 16A de l'auvent 16 comprend une série d'encoches 22 échelonnées sur la hauteur de celle-ci, et la face externe de la paroi avant 30 de la partie mobile 16B de l'auvent comprend une nervure (ici non visible) faisant faiblement saillie et apte à coopérer avec lesdites encoches 22 pour positionner, selon une série de positions stables, la partie mobile 16B de l'auvent 16 par rapport à la partie fixe 16A de celui-ci.

Préférentiellement, en regard des encoches 22 formées sur la face interne de la paroi avant 20 de la partie fixe 16A de l'auvent 16, il est prévu une indication numérique de la largeur ou hauteur de l'auvent, ici quatre largeurs ou hauteurs d'auvent sont prévues, correspondant à quatre largeurs ou hauteurs de goulottes ou moulures associées. De plus, il est prévu, dans la paroi avant 30 de la partie mobile 16B de l'auvent 16, une fenêtre 33 permettant de visualiser l'indication numérique de la largeur ou hauteur d'auvent lorsque la partie mobile de l'auvent est positionnée dans l'une des quatre positions stables prédéfinies par rapport à la partie fixe de celui-ci.

Ainsi, sur la figure 2, la partie mobile 16B de l'auvent 16 est positionnée dans une position extrême correspondant à la plus grande largeur ou hauteur d'auvent, portant l'indication numérique 40.

Bien entendu, selon d'autres modes de réalisation non représentés, on peut prévoir d'autres moyens complémentaires de blocage pour définir la série de positions stables de la partie mobile de l'auvent par rapport au cadre, et plus particulièrement par rapport à la partie fixe dudit auvent solidaire du cadre, et correspondant à différentes largeurs ou hauteurs de goulottes associées.

Par ailleurs, avantageusement, les bras 17 comprennent sur leur face tournée vers la platine du boîtier, deux butées échelonnées en hauteur, la première butée étant située à proximité de l'extrémité libre de chaque bras, et la deuxième butée étant positionnée à une distance plus éloignée de l'extrémité libre du bras correspondant. Ces butées sont aptes à coopérer avec une butée portée à l'extrémité d'une lame souple 18 solidaire du cadre 14 et tournée vers ledit bras 17 correspondant.

Chaque lame souple 18 est solidarisée au cadre 14 par l'intermédiaire d'une console 19 en forme de cadre faisant saillie de la face interne 14'B de chaque paroi latérale 14B du cadre 14 et située à proximité de l'ouverture 15 dudit cadre. Chaque lame souple 18 présente la forme générale d'un col de cygne de sorte que sa partie supérieure tournée vers un bras 17 est sensiblement plane et parallèle audit bras et porte à son extrémité libre la butée.

- Bien entendu, on pourrait prévoir d'autres formes adaptées pour les lames souples.

Cette coopération de butées constitue avantageusement des moyens de solidarisation et de guidage des parties fixe et mobile 16A, 16B de l'auvent 16.

En effet, la première butée située à proximité de l'extrémité libre de chaque bras 17 permet d'assembler de manière définitive la partie mobile 16B de l'auvent au cadre 14 du boîtier (plus particulièrement à la partie fixe 16A de l'auvent solidaire du cadre) lors de sa fabrication. Cela permet de faciliter la mise en place de l'ensemble par l'installateur, de réduire le volume de l'ensemble boîtier/ auvent à conditionner et de faciliter ainsi ce conditionnement.

Lorsque l'installateur veut positionner le boîtier le long d'une goulotte, il enfonce la partie mobile 16B de l'auvent 16 à l'intérieur du cadre 14 du boîtier de sorte que, par déformation élastique des lames souples 18, les butées des bras franchissent celles portées par les lames souples, et la coopération de butées intervient alors entre d'une part, les butées portées par les bras et situées à une distance plus éloignée de leur extrémité libre, et d'autre part les butées portées par les lames 18, cette coopération de butées définissant la position extrême de plus grande largeur de l'auvent correspondant à l'indication numérique 40 (voir figure 2).

En utilisation, les lames souples 18 présentes sur le cadre 14 du boîtier permettent de procurer à l'ensemble une grande élasticité. Grâce à l'élasticité de ces lames souples 18, la partie mobile 16B de l'auvent 16 peut adopter par rapport à sa partie fixe 16A, ou par rapport au cadre 14, un certain angle de part et d'autre de sa position d'alignement.

Cette disposition permet avantageusement de s'affranchir des défauts de planéité des surfaces sur lesquelles le boîtier peut être installé.

Comme on peut le voir plus particulièrement sur la figure 2, chaque bras 17 présente ici avantageusement une largeur ajustée à celle de l'espace existant entre la face interne 14'D d'un bord latéral 14D de l'ouverture frontale 14C du cadre du boîtier, et la face interne 14'B de la paroi latérale 14B du cadre 14 située en regard dudit bord latéral 14D correspondant, de sorte que cet espace intérieur forme une rainure de coulissement pour ledit bras 17.

Ainsi, il n'est pas prévu de moyens supplémentaires pour le coulissement des bras à l'intérieur du cadre du boîtier.

Avantageusement, la longueur en surplus de la paroi avant 30 de la partie mobile 16B de l'auvent s'efface sous la paroi avant 20 de la partie fixe 16A de celui-ci, et les bras 17 coulissent dans un espace préexistant du cadre 14 du boîtier, de sorte que la partie mobile 16B de l'auvent n'interfère pas malencontreusement avec les autres constituants situés dans le boîtier.

Comme cela apparaît sur la figure 1, le boîtier 1 se complète par une platine 40 qui est propre à permettre de rapporter l'ensemble sur la paroi à équiper. Le cadre 14 coiffe ladite platine 40 pour former un logement pour l'appareillage concerné, ladite platine 40 formant un support destiné à recevoir le mécanisme d'appareillage et étant solidarisée au cadre par un système d'encliquetage ou équivalent. La platine 40 vient se positionner en dessous de la coopération des bras 17 de l'auvent avec le cadre.

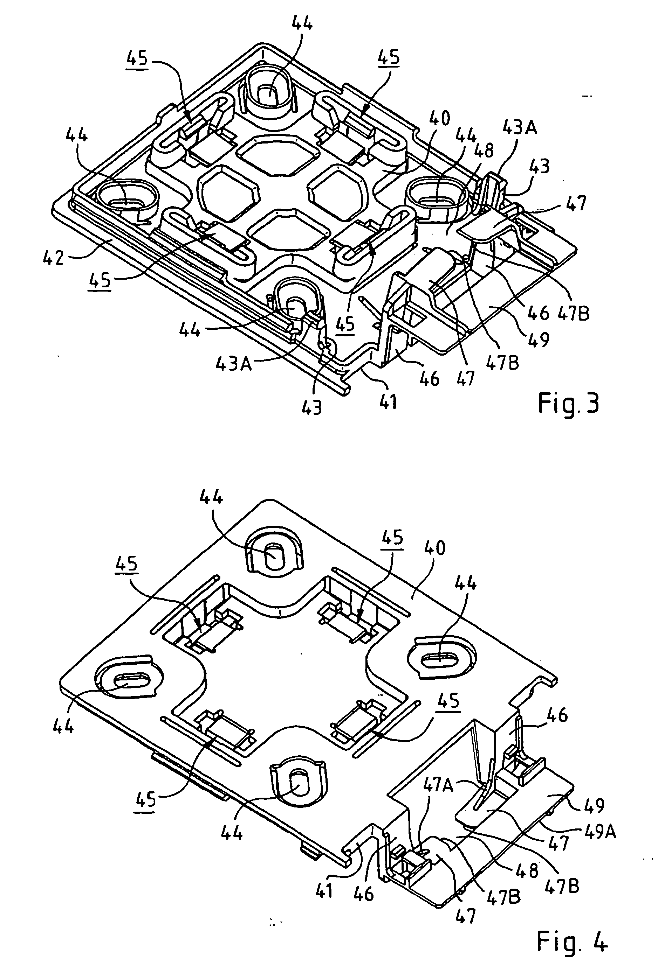

Cette platine 40 va être maintenant décrite plus en détail en référence aux figures 3 et 4.

Cette platine 40 comporte de manière connue en soi une forme généralement carrée avec sur trois de ses bords un trottoir 42 destiné à recevoir les bords correspondants du cadre du boîtier. Le quatrième de ses bords 41 est celui par lequel elle doit côtoyer la goulotte 10.

Cette platine 40 comporte également de façon usuelle, quatre ouvertures 44 disposées sensiblement aux quatre coins de cette platine et orientées ici selon deux diagonales, et au travers desquelles sont destinées à s'engager des vis pour la fixation de la platine sur la paroi sur laquelle est rapporté le boîtier.

La platine 40 comporte également quatre dispositifs identiques d'encliquetage 45 pour la fixation du mécanisme de l'appareillage électrique à loger dans le boîtier. Chacun de ces dispositifs d'encliquetage est disposé entre deux ouvertures 44 de sorte que les quatre dispositifs d'encliquetage 45 sont disposés aux quatre points cardinaux. Ces dispositifs d'encliquetage 45 ne seront pas ici décrits dans le détail, et comportent globalement des dents d'encliquetage en regard recevant des dents d'encliquetage complémentaires du mécanisme d'appareillage électrique ici non représenté.

En outre, la platine 40 comporte deux pattes 43 pour l'encliquetage du cadre du boîtier sur ladite platine, ces pattes 43 sont situées à proximité du bord 41 de la platine par lequel elle doit côtoyer la goulotte, et sont positionnées à la même hauteur chacune parallèlement à un bord latéral de ladite platine. Ces pattes 43 s'élèvent verticalement à partir de la platine et comportent à leur extrémité libre une dent d'encliquetage 43A destinée à coopérer avec une dent d'encliquetage 19A complémentaire prévue à l'intérieur de chaque console 19 portée par chaque face interne de chaque bord latéral 14B du cadre 14 du boîtier 1.

En outre, avantageusement, la platine 40 comporte ici préférentiellement sur le bord 41 par lequel elle doit côtoyer la goulotte, des moyens de retenue et de guidage de câbles ou conducteurs électriques (non représentés), circulant dans ladite goulotte et destinés à être raccordés à l'appareillage concerné.

Ces moyens de retenue et de guidage comprennent ici deux pattes 46 situées à distance l'une de l'autre et qui s'élèvent verticalement à partir de la platine 40, ces pattes 46 comportant chacune un retour sensiblement horizontal 47 surplombant ladite platine, les deux retours 47 étant dirigés l'un vers l'autre.

Chaque retour 47 se présente sous la forme d'une languette présentant une certaine flexibilité.

En fonction de leur flexibilité, les retours 47 desdites pattes 46 peuvent être sensiblement jointifs, se chevaucher, ou encore être disposés l'un par rapport à l'autre de sorte qu'il subsiste entre leurs bords libres 47B en regard un certain jeu 48 pour le passage des câbles ou conducteurs électriques.

Cette dernière solution est le cas de la platine représentée sur les figures 3 et 4, cas dans lequel, les retours 47 sont plutôt rigides. Cette rigidité est notamment due au fait qu'ils comprennent sur leur face interne (voir figure 4) une nervure 47A de rigidification.

Ainsi, grâce aux moyens de retenue et de guidage, il est facile, après avoir posé le socle de la goulotte et la platine du boîtier de procéder à la mise en place des conducteurs et/ou câbles électriques à raccorder à l'appareillage concerné et de les laisser en attente sans être gêné parce qu'ils auraient tendance à sortir.

Le câblage de l'appareillage peut se faire indifféremment, l'appareillage étant en place ou étant dans la main de l'installateur, les conducteurs étant un à un dégagés desdites pattes 46, l'ensemble étant mis en place connecté.

Selon l'exemple représenté, les pattes 46 portent en dessous de leurs retours 47 une plaque de soutien et de guidage 49 des conducteurs électriques, qui surplombe le socle 11 de la goulotte 10 de sorte que son bord externe 49A se place au-dessus du volume de câblage de ladite goulotte. Ainsi, les retours 47 surplombant la platine maintiennent les câbles ou conducteurs électriques dans le volume limité par les pattes 46, lesdits retours 47 et la platine de soutien et de guidage 49.

Avantageusement, lorsque la goulotte 10 est divisée en plusieurs compartiments de câblage, ce qui est le cas de celle représentée sur la figure 3, et que les câbles ou conducteurs électriques à relier à l'appareillage électrique situé dans le boîtier, circulent dans un autre compartiment de la goulotte que celui adjacent au boîtier, la plaque de soutien et de guidage 49 s'étendant au-dessus du compartiment de câblage adjacent au boîtier, permet de former une paroi de séparation entre les câbles ou conducteurs provenant de l'autre compartiment et reliés audit appareillage, et ceux circulant dans ledit compartiment de câblage adjacent au boîtier. En effet, dans ce cas les câbles ou conducteurs électriques reliés à l'appareillage situé dans le boîtier passent au-dessus dudit compartiment adjacent au boîtier, ce compartiment étant au droit du boîtier, fermé (au moins partiellement) supérieurement et transversalement par ladite paroi de soutien et de guidage 49.

Les moyens de retenue et de guidage comprenant les pattes, les retours, ainsi que la plaque de soutien et de guidage viennent de formation avec ladite platine 40 réalisée par moulage d'une matière plastique.

Plus généralement, il est bien entendu que les parties du boîtier sont réalisées en plastique moulé.

Plus particulièrement, en ce qui concerne la partie mobile de l'auvent 16B, les bras et les parois d'embout et avant de cette partie mobile forment une seule pièce issue de moulage d'une matière plastique.

En particulier, on pourra prévoir que les moyens de retenue et de guidage portés par la platine du boîtier, soient situés à proximité du bord par lequel elle doit côtoyer la goulotte, sans être comme cela est représenté, prévus sur le bord par lui-même.

On pourra également prévoir que ces moyens de retenue et de guidage comprennent une seule patte verticale comprenant un retour horizontal.

## Revendications

1. Boîtier (1) pour appareillage électrique à disposer le long d'une goulotte (10) intervenant en saillie sur une paroi, qui comporte une platine (40) adaptée à être rapportée sur cette paroi et un cadre (14) coiffant ladite platine (40) pour former un logement pour l'appareillage concerné **caractérisé en ce que** ladite platine comprend au moins à proximité d'un de ses bords (41) par lequel elle doit côtoyer la goulotte, des moyens de retenue et de guidage (46, 47, 49) de câbles ou conducteurs électriques circulant dans ladite goulotte et destinés être raccordés à l'appareillage concerné lesdits moyens de retenue et de guidage comprenant au moins une patte (46) qui s'élève verticalement à partir de la platine (40) et comprend un retour sensiblement horizontal (47) surplombant ladite platine (40).

2. Boîtier (1) selon la revendication 1, **caractérisé en ce que** le retour (47) se présente sous la forme d'une languette présentant une certaine flexibilité.

3. Boîtier (1) selon l'une des revendications 1 ou 2, **caractérisé en ce que** les moyens de retenue et de guidage comprennent deux pattes (46) situées à distance l'une de l'autre et qui s'élèvent verticalement à partir de ladite platine, ces pattes comportant chacune un retour horizontal (47) surplombant ladite platine, les deux retours (47) étant dirigés l'un vers l'autre.

4. Boîtier (1) selon la revendication 3, **caractérisé en ce que** les retours (47) desdites pattes (46) sont sensiblement jointifs.

5. Boîtier (1) selon la revendication 3, **caractérisé en ce que** les retours (47) desdites pattes (46) sont disposés l'un par rapport à l'autre de sorte qu'il subsiste entre leurs bords libres (47A) en regard un certain jeu (48) pour le passage des câbles ou conducteurs électriques.

6. Boîtier (1) selon la revendication 3, **caractérisé en ce que** les retours (47) desdites pattes (46) se chevauchent.

7. Boîtier (1) selon l'une quelconque des revendications 1 à 6, **caractérisé en ce que** chaque patte (46) est située sur le bord (41) de la platine (40) par lequel elle doit côtoyer la goulotte (10).

8. Boîtier (1) selon l'une quelconque des revendications 3 à 7, **caractérisé en ce que** lesdites pattes (46) portent en dessous de leurs retours (47) une plaque de soutien et de guidage (49) des conducteurs électriques, qui surplombe le socle (11) de la goulotte (10) de sorte que son bord externe (49A) se place au-dessus du volume de câblage de ladite goulotte.

9. Boîtier (1) selon l'une quelconque des revendications 1 à 8, **caractérisé en ce que** les moyens de retenue et de guidage (46, 47, 49) viennent de formation avec ladite platine (40).

## Claims

1. Housing (1) for an electrical apparatus to be disposed along a cable duct (10) protruding from a wall, which comprises a plate (40) adapted to being attached to this wall and a frame (14) topping said plate (40) to form a recess for the apparatus in question, **characterised in that** said plate comprises, at least in proximity to one of its edges (41) with which it is to border the cable duct, means (46, 47, 49) for holding and guiding electrical cables or conductors which pass through said cable duct and are intended to be connected to the apparatus in question, said holding and guide means comprising at least one lug (46) which rises vertically from the plate (40) and comprises a substantially horizontal return (47) overhanging said plate (40).

2. Housing (1) according to claim 1, **characterised in that** the return (47) is in the form of a tongue displaying a certain flexibility.

3. Housing (1) according to one of claims 1 or 2, **characterised in that** the holding and guide means comprise two lugs (46) which are set apart from each other and rise vertically from said plate, these lugs each comprising a horizontal return (47) overhanging said plate, the two returns (47) being directed toward each other.

4. Housing (1) according to claim 3, **characterised in that** the returns (47) of said lugs (46) are substantially joined.

5. Housing (1) according to claim 3, **characterised in that** the returns (47) of said lugs (46) are disposed relative to each other in such a way that there remains between their mutually facing free edges (47A) a certain clearance (48) through which the electrical cables or conductors can pass.

6. Housing (1) according to claim 3, **characterised in that** the returns (47) of said lugs (46) overlap.

7. Housing (1) according to any one of claims 1 to 6, **characterised in that** each lug (46) is situated on the edge (41) of the plate (40) with which it is to border the cable duct (10).

8. Housing (1) according to any one of claims 3 to 7, **characterised in that** said lugs (46) carry, below their returns (47), a panel (49) for supporting and guiding the electrical conductors, which overhangs the base (11) of the cable duct (10) in such a way that its outer edge (49A) is placed above the cabling volume of said cable duct.

9. Housing (1) according to any one of claims 1 to 8, **characterised in that** the holding and guide means (46, 47, 48) are formed integrally with said plate (40).

## Patentansprüche

1. Dose (1) für elektrisches Installationsgerät, das entlang eines an einer Wand vorspringend angebrachten Kabelkanals (10) angeordnet werden soll, mit einer Platte (40), die an dieser Wand angesetzt zu werden vermag, und einem die Platte (40) bedeckenden Rahmen (14) zum Bilden einer Aufnahme für das betreffende Installationsgerät,
**dadurch gekennzeichnet, dass** die Platte wenigstens in der Nähe eines ihrer Ränder (41), mit dem sie am Kabelkanal entlangläuft, Mittel (46, 47) zum Halten und Führen von Kabeln oder elektrischen Leitungen aufweist, die in dem Kabelkanal verlegt und dazu bestimmt sind, an das betreffende Installationsgerät angeschlossen zu werden, wobei die Halte- und Führungsmittel wenigstens eine Lasche (46) aufweisen, die sich von der Platte (40) aus erhebt und eine im Wesentlichen waagerechte Umbiegung (47) aufweist, die über die Platte (40) ragt.

2. Dose (1) nach Anspruch 1,
**dadurch gekennzeichnet, dass** die Umbiegung (47) die Form einer Zunge hat, die eine gewisse Biegbarkeit aufweist.

3. Dose (1) nach einem der Ansprüche 1 oder 2,
**dadurch gekennzeichnet, dass** die Halte- und Führungsmittel zwei voneinander beabstandet angeordnete Laschen (46) aufweisen, die sich senkrecht von der Platte aus erheben, wobei die Laschen jeweils eine über die Platte ragende waagerechte Umbiegung (47) aufweisen, wobei die beiden Umbiegungen (47) zueinander weisen.

4. Dose (1) nach Anspruch 3,
**dadurch gekennzeichnet, dass** die Umbiegungen (47) der Laschen (46) im Wesentlichen aneinanderstoßen.

5. Dose (1) nach Anspruch 3,
**dadurch gekennzeichnet, dass** die Umbiegungen (47) der Laschen (46) bezüglich einander so angeordnet sind, dass zwischen ihren sich gegenüberliegenden freien Rändern (47A) ein gewisser Zwischenraum (48) zum Hindurchführen der Kabel und elektrischen Leitungen bestehen bleibt.

6. Dose (1) nach Anspruch 3,
**dadurch gekennzeichnet, dass** sich die Umbiegungen (47) der Laschen (46) überlappen.

7. Dose (1) nach einem der Ansprüche 1 bis 6,
**dadurch gekennzeichnet, dass** jede Lasche (46) an dem Rand (41) der Platte (40) angeordnet ist, mit dem diese am Kabelkanal (10) entlangläuft.

8. Dose (1) nach einem der Ansprüche 3 bis 7,
**dadurch gekennzeichnet, dass** die Laschen (46) unter ihren Umbiegungen (47) eine Platte (49) zum Halten und Führen der elektrischen Leitungen tragen, die solchermaßen über den Sockel (11) des Kabelkanals (10) ragt, dass ihr äußerer Rand (49A) über dem Kabelvolumen des Kabelkanals liegt.

9. Dose (1) nach einem der Ansprüche 1 bis 8,
**dadurch gekennzeichnet, dass** die Halte- und Führungsmittel (46, 47, 49) einstückig an die Platte (40) angeformt sind.
